# EUROPEAN PATENT APPLICATION

(11) **EP 2 815 918 A2**
(43) Date of publication of application: **24.12.2014**
(21) Application number: 14173177.8
(22) Date of filing: 19.06.2014
(51) Int. Cl.: B60P 3/36, E05B 73/00

(54) **Caravan security device**

(30) Priority: 19.06.2013 GB 201310923
(71) Applicant: Mobey, John James, Southbourne Emsworth, West Sussex PO10 8JH (GB); Cooper, Ben Philip, Chichester, West Sussex PO19 6AY (GB)
(72) Inventor: Mobey, John James, Southbourne Emsworth, West Sussex PO10 8JH (GB); Cooper, Ben Philip, Chichester, West Sussex PO19 6AY (GB)
(74) Representative: Schlich, George

(57) **Abstract**

A caravan security device comprises a housing to be located inside a caravan and a face plate to be located outside, e.g. on an outer wall of, the caravan, wherein (i) the housing comprises a retractable, spooled security cable having a free end, and a lock to secure the free end to the housing, and (ii) the face plate comprises one or more through holes to allow access by a user through the face plate and through the caravan wall to the housing to operate the lock and to allow the security cable to be pulled through the face plate, attached to the object to be secured and then returned back through the face plate to the lock.

## Description

### Field of the Invention

The present invention relates to a security device mounted inside a mobile property, such as a caravan or motor home, to protect objects to be stored outside of the property.

### Background to the Invention

Mobile properties such as caravans and motor homes comprise limited living space which is further reduced if particularly large and bulky objects have to be stored inside. Storing these objects outside, however, exposes them to theft unless they can be secured effectively.

Existing security devices, such as cable locks, can often be interfered with or removed leaving a thief with the opportunity to steal any goods originally protected. Increasing the size and strength of the lock is impractical for transport reasons. Anchoring a cable lock to a heavy and/or immovable object is also not practical since such an object might not always be available.

It is also often the case that multiple goods need securing and this usually requires multiple locks. Carrying around multiple locks is inconvenient and cumbersome and it is possible that the lock(s) could be misplaced or forgotten.

Furthermore, locks exposed to moisture or left outdoors can often become rusty, making their operation difficult.

US 5768920 relates to a retractable-cable locking device suitable for mounting in a vehicle and securing cargo to the vehicle. The device is affixed to a storage box located in the bed of a vehicle. The device comprises a flange which enables the device to be affixed to a front flat surface of the storage box.

US 2006/0130541 relates to a personal property cable lock assembly for mounting to a vehicle. The assembly comprises a cable lockbox attached to a coupler, the coupler itself mounted on a vehicle.

An object of the present invention is to provide an alternative, preferably improved, security device which aims to address one or more of the foregoing disadvantages. Specific embodiments of the invention aim to provide an improved security device for a caravan and a caravan fitted therewith.

### Summary of the Invention

Accordingly, the invention provides a device for securing an object to a caravan, comprising a housing to be located inside a caravan and a face plate to be located outside, e.g. on an outer wall of, the caravan, wherein (i) the housing comprises a retractable, spooled security cable having a free end, and a lock to secure the free end to the housing, and (ii) the face plate comprises one or more through holes to allow access by a user through the face plate and through the caravan wall to the housing to operate the lock and to allow the security cable to be pulled through the face plate, attached to the object to be secured and then returned back through the face plate to the lock.

Thus, the invention enables an object or objects to be secured on the outside of a caravan, maximizing space available inside the caravan.

The device can be retro fit into an existing caravan thus eliminating the need for an anchor point outside the caravan. The risk of misplacing or forgetting the lock is also eliminated as the lock is inside the caravan.

Furthermore, having the lock located inside the caravan makes it harder to tamper with or remove, as well as protecting it from outside elements which could cause rusting.

The face plate can comprise one through hole for access of a key to the lock in the housing, one through hole for the cable to be pulled through when being extended out of or retracted into the spool in the housing and one through hole for the cable to be returned to the lock in the housing - hence separate holes for each. Alternatively, a hole with combined access can be provided.

Typically, the face plate comprises an external flap to cover the one or more through holes when the device is not in use.

To firmly attach the device to a caravan, it is preferred that the face plate and housing are adapted to be attached to each other through the caravan wall, e.g. by bolts through the wall. The adjusted element of the fixing(s), e.g. the nut(s) of the bolt(s), can then be inside the caravan. One or more fittings to secure the face plate to the housing, through the caravan wall, can be integral with the face plate. Thus security can in various ways be further improved by having fewer external components that can be tampered with or attacked.

The housing, face plate and associated fittings can be adapted for use with caravan walls of varying thickness, which are generally in the range of about 20mm to 45mm.

The face plate is preferably adapted to be partially recessed into the caravan wall, and in a specific embodiment is recessed approximately 25mm (this being a standard caravan wall thickness) into the caravan wall.

The housing can be widened to resist being forcibly pulled through the caravan wall. This can take the form of one or more laterally extending side plates to present a widened area against the caravan wall. A widened area or areas in the form of one or more lateral housing flanges can be provided. Thus the housing is widened or further widened in comparison with the hole or aperture in the caravan wall through which the face plate connects to the housing. In an embodiment of the invention, shown in more detail below, attachment of the face plate to the housing can be achieved with one or more fittings, e.g. bolts, that secure through the wall into and through the one or more housing flanges. The widening of the housing may extend all the way around the circumference of the housing at its junction with the wall when *in situ.*

The housing is preferably cut away or recessed in a lower front portion, so the housing can be located on a caravan floor with an upper front portion of the housing abutting the wall and with the cut away or recessed lower front portion spaced from the wall to allow caravan fittings, e.g. pipes and/or wiring, on the caravan floor to pass under the upper front portion and between the wall and that portion of the housing that is located on the floor. Fittings are preferably provided so the housing may be securely attached to the caravan floor, e.g. via bolts.

The housing can be adapted, e.g. to be partially recessed into the caravan wall, to protect against water ingress through the wall. This can take the form of a protruding portion which overlaps with the recessed portion of the face plate.

The cable can be retracted by a spring and is preferably on a sprung spool.

The cable can be mounted on the spool in combination with a ratchet that can be operated to prevent further cable being pulled out of the spool through the face plate, wherein operation of the lock also causes operation of the ratchet.

The cable can, separately or in addition to the above, be mounted on the spool in combination with a ratchet that can be operated to prevent cable being retracted onto the spool.

The device preferably comprises a circuit generator to generate an electrical circuit running through the cable and an alarm or other alert that is activated when the circuit is broken. The alarm or alert can include one or more of an audible alarm, a visual alarm, activation of a gps device and activation of a SMS enabled device.

The device is particularly suitable for use with a caravan but can also be used with other similar types of vehicles and mobile properties such as motor homes.

The invention also provides a method of securing an object to a caravan, comprising:-
providing a caravan having a security device attached thereto, the device comprising a housing located inside the caravan and a face plate located outside, e.g. on an outer wall of, the caravan, wherein (i) the housing comprises a retractable, spooled security cable having a free end and a lock to secure the free end to the housing, and (ii) the face plate comprises one or more through holes to allow access by a user through the face plate to the housing to operate the lock and to allow the security cable to be pulled through the face plate, attached to an object to be secured and then returned back through the face plate to the lock;
pulling the free end of the cable from the spool through the face plate;
attaching the cable to the object, e.g. by passing the cable through a hole or loop in or on the object;
returning the free end of the cable back through the face plate; and
securing the free end of the cable to the housing using the lock.

Preferred such methods may use a device characterized by any device feature as described herein.

For example, the free end of the cable may be secured to the housing and the alarm may be armed using a key; preferably operating the key both secures the free end and arms the alarm at the same time. In an embodiment shown below, the free end is inserted into the housing and operating (e.g. turning) the key secures the free end and arms the device.

The invention is now described with reference to specific embodiments as described below, with reference to the accompanying drawings in which:-
Figure 1 shows an exploded, isometric and schematic view of a security device of a first specific embodiment of the invention;
Figure 2 shows a schematic view of a caravan to which a bicycle and barbeque are secured using the security device of Figure 1;
Figure 3 shows a back and side view of a second specific embodiment of the invention;
Figure 4 shows a front and side view of the embodiment of Fig. 3;
Figure 5 shows a side view of the embodiment of Fig. 3;
Figure 6 shows a top and side view of the embodiment of Fig. 3 attached to the caravan wall; and
Figure 7 shows a front view of the embodiment of Fig. 3 from outside the caravan.

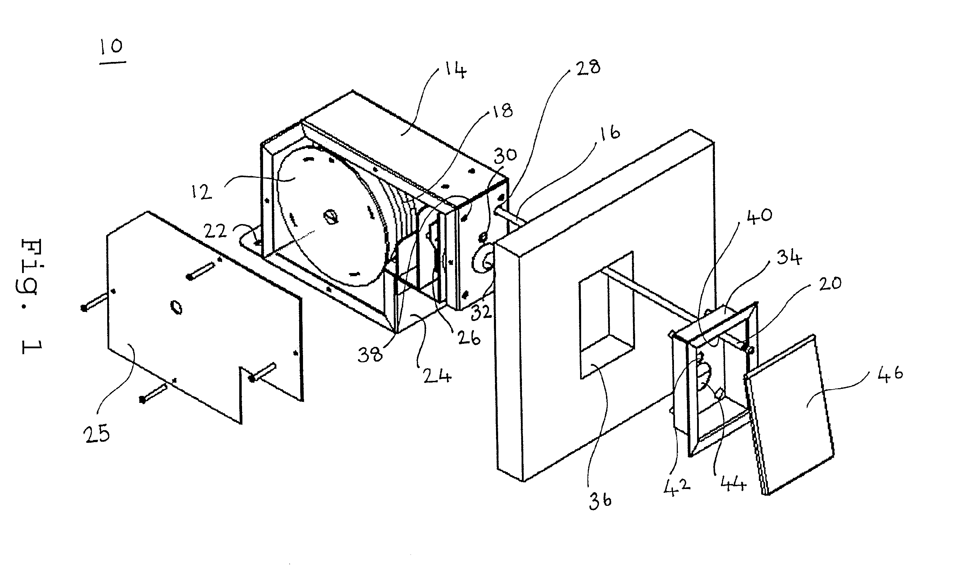

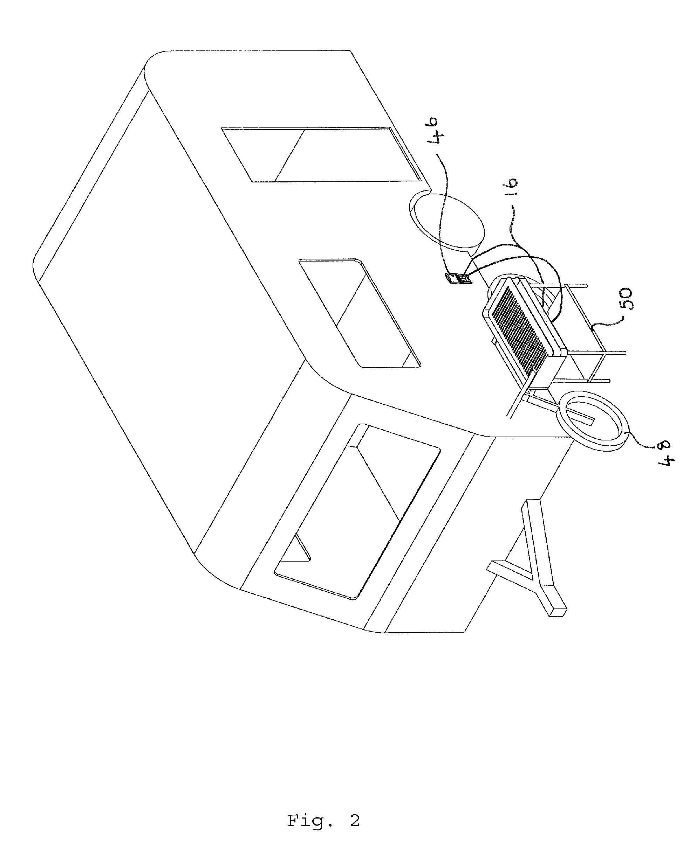

Referring to figures 1 and 2, a security device 10 is shown comprising a retracting mechanism 12 inside a housing 14, said mechanism comprising a cable 16 wound on a spool 18 wherein the cable retracts around the spool by means of a spring-loaded mechanism (not shown) at one end and has a bullet connector 20 at its other end.

The housing 14 is provided with screw holes 22 (only one shown) at its base for mounting to the floor of a caravan (not shown) and is cut out in a front portion 24 for easier positioning around e.g. water pipes. The housing 14 has a removable side plate 25 allowing access to the internal components.

The housing 14 also includes an alarm 26 which when switched on is activated by cutting or otherwise breaking the cable 16 or forcibly removing the bullet connector 20 from its connector locking terminal 30.

At one end of the housing 14 is provided a hole 28, for exit of the cable-bullet connector, and the connector locking terminal 30 for the returned bullet connector 20. The returned bullet connector is fastened into place in the locking terminal by a lock-and-key arrangement 32.

A face plate 34 is positioned on the outside of the caravan, recessed within an aperture 36 in the wall of the caravan and is fixedly attached to the front face of the housing via bolts (not shown) that locate into bolt holes 38, holding the device firmly to the wall. The face plate includes a cable exit hole 40 (obscured in Figure 1 by the cable) and cable return hole 42 which are positioned in such a way that they correspond with holes 28 and 30 of the housing, respectively. A key hole 44 is provided for interaction with the lock arrangement 32.

The face plate 34 is covered by a flap 46, hinged at an upper portion in the face plate.

In use, the housing 14 is mounted inside the caravan, bolted to the floor and secured through an aperture in the wall to the face plate 34. The cable 16 is withdrawn from the spool 18, the cable-bullet connector exits through hole 28 and corresponding hole 40 on the face plate 34, through the objects to be secured on the outside of the caravan, in this case a bicycle 48 and barbeque 50, and then back through the cable return hole 42 to be fastened to the connector locking terminal 30 on the housing 14 mounted inside the caravan and secured using a key.

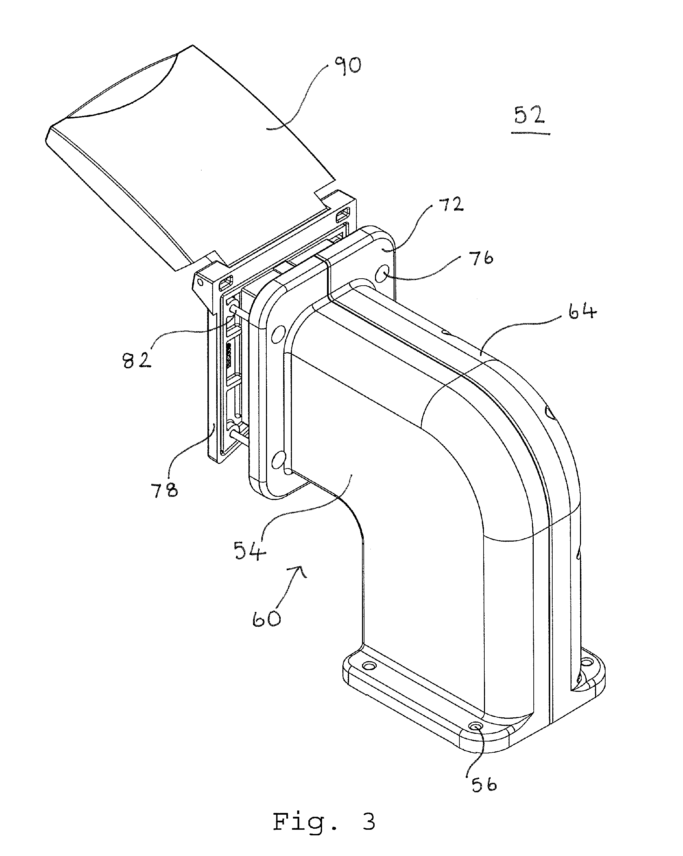

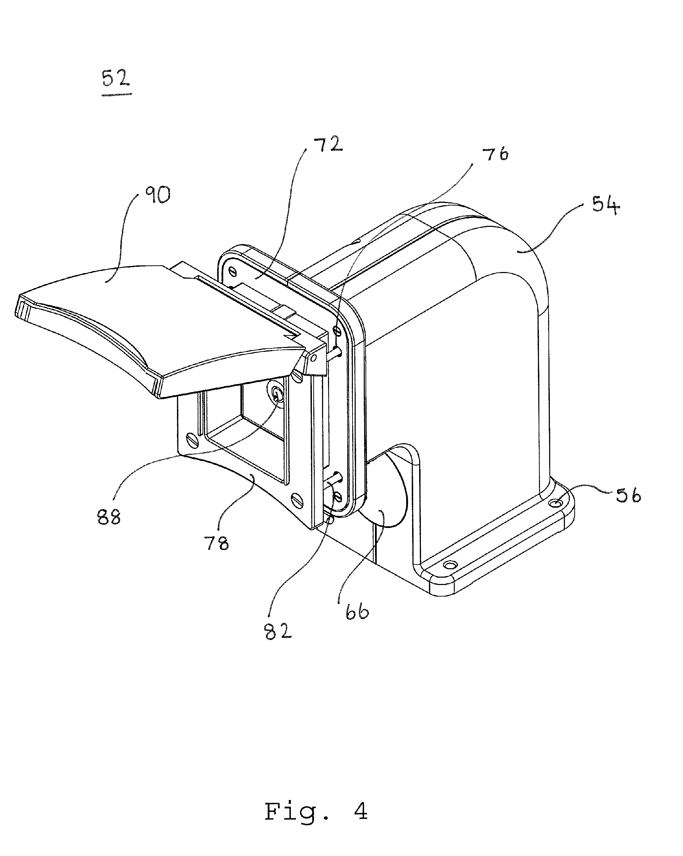

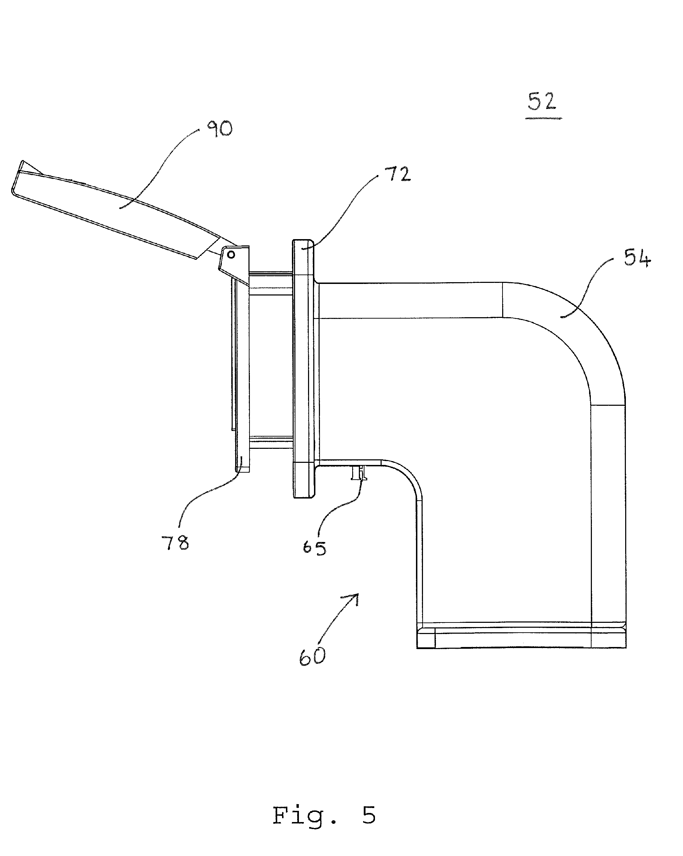

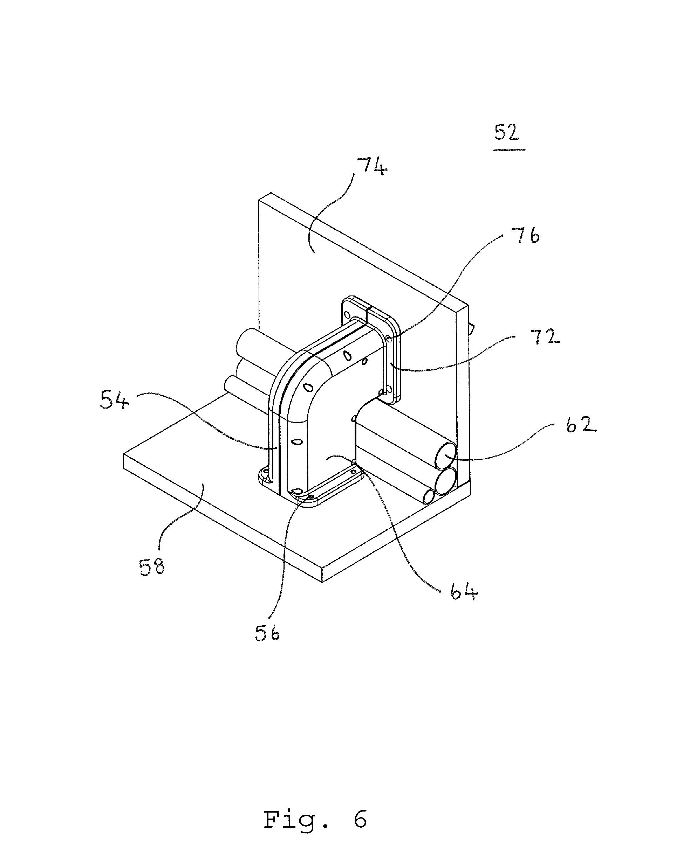

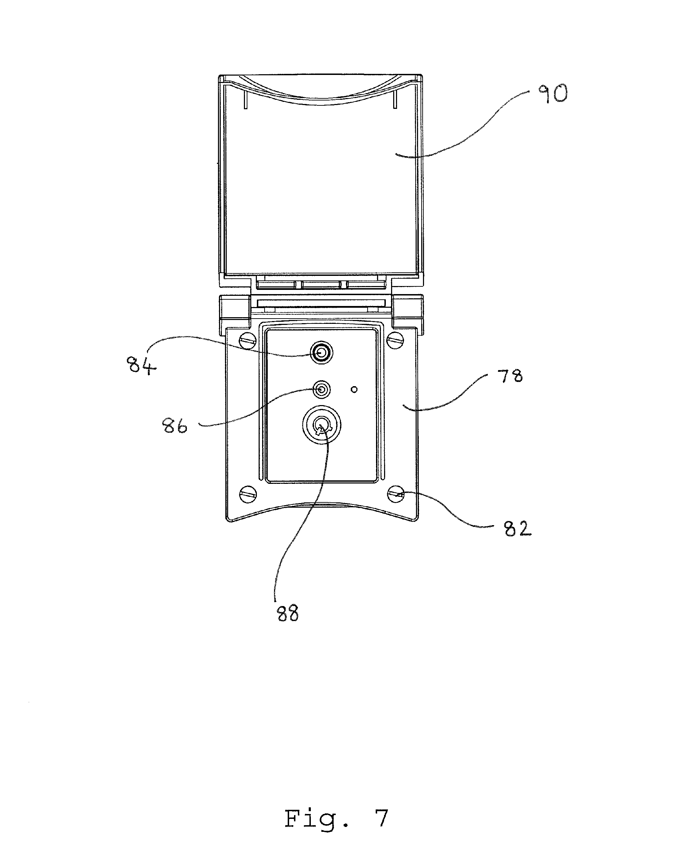

Referring to figures 3 to 7, a security device 52 is shown comprising the retracting mechanism of figure 1 (like numerals indicating like features) inside a housing 54.

The housing 54 is provided with screw holes 56 at its base for mounting to the floor of a caravan 58 and is cut out in a front portion 60 for easier positioning around e.g. water pipes 62. The housing 54 has a removable side plate 64 allowing access to the internal components. The housing also has a 12V power supply inlet 65.

The housing 54 also includes an alarm outlet 66 (covered as shown), the alarm 26 operable as discussed above for figure 1. An optional outlet for the alarm is also located on the underneath side of the housing (not shown).

At one end of the housing 54 is provided a hole 68 for exit of the cable-bullet connector 20 (not shown) and the connector locking terminal 70 for the returned bullet connector 20 (not shown). The returned bullet connector 20 is fastened into place in the locking terminal 70 by a lock-and-key arrangement like that in figure 1.

The housing further comprises housing flanges 72 to prevent the housing being forcibly removed through the caravan wall 74. The flanges 72 are provided with bolt holes 76 for securing the housing 54 through the caravan wall 74 to a face plate 78.

The face plate 78 is positioned on the outside of the caravan, recessed within an aperture 80 in the wall of the caravan 74 and is fixedly attached to the front face of the housing 54 via bolts 82 that locate into bolt holes 76, holding the device firmly to the wall. The face plate includes a cable exit hole 84 and cable return hole 86 which are positioned in such a way that they correspond with holes 68 and 70 of the housing 54, respectively. A key hole 88 is provided for interaction with the lock arrangement.

The face plate 78 is covered by a flap 90, hinged at an upper portion in the face plate.

Thus the invention provides a device for securing an object to a caravan or other mobile property.

## Claims

1. A device for securing an object to a caravan, comprising a housing to be located inside a caravan and a face plate to be located outside, e.g. on an outer wall of, the caravan, wherein (i) the housing comprises a retractable, spooled security cable having a free end, and a lock to secure the free end to the housing, and (ii) the face plate comprises one or more through holes to allow access by a user through the face plate and through the caravan wall to the housing to operate the lock and to allow the security cable to be pulled through the face plate, attached to the object to be secured and then returned back through the face plate to the lock.

2. A device according to claim 1, wherein the face plate comprises an external flap to cover the one or more through holes when the device is not in use.

3. A device according to any previous claim, wherein the face plate and housing are adapted to be attached to each other through the caravan wall, e.g. by bolts through the wall.

4. A device according to any previous claim, wherein the housing is widened to resist being forcibly pulled through the caravan wall.

5. A device according to claim 4, wherein the housing comprises one or more laterally extending side plates to present a widened area against the caravan wall.

6. A device according to claim 4, wherein the widening of the housing extends all the way round the circumference of the housing at its junction with the caravan wall.

7. A device according to any previous claim, wherein the housing is cut away or recessed in a lower front portion, so the housing can be located on a caravan floor with an upper front portion of the housing abutting the wall and with the cut away or recessed lower front portion spaced from the wall to allow caravan fittings, e.g. pipes and/or wiring, on the caravan floor to pass under the upper front portion and between the wall and that portion of the housing that is located on the floor.

8. A device according to any previous claim, wherein the cable is retracted by a spring.

9. A device according to any previous claim, wherein the cable is mounted on the spool in combination with a ratchet that can be operated to prevent further cable being pulled out of the spool through the face plate.

10. A device according to any previous claim, comprising a circuit generator to generate an electrical circuit running through the cable and an alarm or other alert that is activated when the circuit is broken.

11. A device according to claim 10, wherein the alarm or other alert includes one or more of an audible alarm, a visual alarm, activation of a gps device and activation of a SMS enabled device.

12. A method of securing an object to a caravan, comprising:-
providing a caravan having a security device attached thereto, the device comprising a housing located inside the caravan and a face plate located outside, e.g. on an outer wall of, the caravan, wherein (i) the housing comprises a retractable, spooled security cable having a free end and a lock to secure the free end to the housing, and (ii) the face plate comprises one or more through holes to allow access by a user through the face plate to the housing to operate the lock and to allow the security cable to be pulled through the face plate, attached to an object to be secured and then returned back through the face plate to the lock;
pulling the free end of the cable from the spool through the face plate;
attaching the cable to the object, e.g. by passing the cable through a hole or loop in or on the object;
returning the free end of the cable back through the face plate; and
securing the free end of the cable to the housing using the lock.

13. A method according to claim 12, wherein securing the free end of the cable to the housing using the lock simultaneously arms an alarm or other alert.

14. A method according to claim 12 or 13, wherein the device is **characterized by** the features of any of claims 1 to 11.

15. A caravan fitted with a security device according to any of claims 1 to 11.
